(19) Europäisches Patentamt
European Patent Office
Office européen des brevets

(11) **EP 4 563 006 A1**

(12) **EUROPEAN PATENT APPLICATION**

(43) Date of publication:
04.06.2025 Bulletin 2025/23

(21) Application number: 23307112.5

(22) Date of filing: 01.12.2023

(51) International Patent Classification (IPC):
*A23L 2/39* (2006.01)  *A23L 2/52* (2006.01)
*A23L 2/66* (2006.01)  *A23L 33/185* (2016.01)

(52) Cooperative Patent Classification (CPC):
A23L 2/66; A23L 2/39; A23L 2/52; A23L 33/185

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2023 US 202363603283 P

(71) Applicant: ROQUETTE FRERES
62136 Lestrem (FR)

(72) Inventors:
• KIMMEL, Jennifer Louise
NILES, 60174 (US)
• KOVAL, Kevin Patrick
NAPERVILLE, 60540 (US)

(74) Representative: Plasseraud IP
104 Rue de Richelieu
CS92104
75080 Paris Cedex 02 (FR)

(54) **POWDER MIX FORMULATIONS WITH IMPROVED SENSORY PROFILE**

(57)    The invention relates to a powder preparation for beverages comprising a leguminous protein extract, wherein the leguminous protein extract has a protein content, expressed on dry weight basis of the extract, of 75% or higher, a dry matter ranging from 90 to 100%, wherein the protein extract has a Turbiscan Stability Index TSI at the Middle Region TSIMR below 5.0 and a rheometer viscosity going from 0.40 to 0.75 Pa.s, the viscosity being determined at 20°C, with a shear rate of 40s-1, on an aqueous suspension having 15% weight of dry matter.

EP 4 563 006 A1

## Description

## Technical field

The present invention relates to a powder preparation for beverages, based on leguminous-plant proteins, having improved textural organoleptic properties, in particular improved creaminess, and/or a reduced chalkiness. The invention also relates to the use of the leguminous protein extract to provide a powder preparation for beverages with such benefits, to a process of manufacturing the powder preparation, and to a method of preparation of a beverage using such powder preparation.

## Prior art

Daily human protein requirements are between 12 and 20% of the food ration. These proteins are supplied both by products of animal origin (meat, fish, eggs, dairy products) and vegetable origin (cereals, legumes, algae).

However, in industrialized countries, protein intake is mainly in the form of protein of animal origin. In the field of powder mixes, whey protein from animal milk is today still widely used. Numerous studies show that excessive consumption of proteins of animal origin to the detriment of vegetable proteins is one of the causes of increase in cancers and cardiovascular diseases.

In addition, animal proteins have many disadvantages, both in terms of their allergenicity, particularly concerning proteins from milk or eggs, and in environmental terms in relation to the harmful effects of intensive farming.

In a general manner, the use of vegetal proteins instead of animal protein has a favorable impact on the environment. Indeed, as final products are concerned, the use of vegetal proteins allows to use less energy and to generate much less greenhouse gas emissions.

Thus, there is a growing demand from manufacturers for ingredients of plant origin having advantageous nutritional and functional properties without, however, having the drawbacks of ingredients of animal origin.

Plants can be for example oleaginous plants such as soy, cereals such as oat. Different classes of plant exist, and the protein of each plant will comprise different kind of proteins, proportions, and properties. In other words, proteins extracted from oat (such as the ones described in WO2022/144452 A1) or soy proteins will be very different from leguminous proteins such as pea, fava bean or mung bean.

Since the 1970s, interest in leguminous proteins has grown strongly, as an alternative protein resource to animal proteins intended for animal and human food. For example, pea contains about 27% by weight of protein content. Pea proteins, mainly pea globulin proteins, have been extracted and industrially valued for many years now. Protein extracts incorporate protein isolate and protein concentrate.

In the field of powder preparations for beverages, also called "powder mix beverages", "powder mix" or "ready to mix beverages", the growing demand for protein sources, including plant-based protein sources, has led to the exploration of innovative protein ingredients that deliver enhanced sensory properties, such as creaminess and mouthfeel. However, concerning leguminous-plant proteins available in the market, one drawback of is that their behavior is different from animal milk proteins in terms of texture in the mouth: they generally give lower creaminess, lower mouthfeel, and higher chalkiness. One solution improving some of these attributes has been developed but does not give full satisfaction. For example, WO2020/007940 A1 describes a rehydratable food composition comprising pea proteins and a potassium metaphosphate with lower chalkiness when rehydrated; however, this solution is still limited as, for example, the document does not disclose improved creaminess. There is still a need to provide new leguminous protein extracts able to improve the texture in the mouth of powder mix formulations.

Moreover, certain protein extracts do present a low suspensibility in water. When used in a powder mix formulation, this drawback is especially challenging because, to be utilized by the consumer, the powder mix is generally incorporated in a protein-shaker with water and the powder is suspended by shaking. Foaming occurs during that step. The shaker is then allowed to stand, so that the foam quantity reduces. The protein powder can also hydrate during that period, this hydration contributing to the texture. To obtain good sensory of the powder beverage when consumed, it is thus very important that the protein is maintained in suspension during the time it is allowed to stand.

Furthermore, the recipe of a powder mix formula may comprise very numerous ingredients to provide the desired attributes. For example, hydrocolloids such as xanthan gum may be used to provide increased mouthfeel to the powder mix formula. So, it may be helpful to provide powder mix formulas with good texture that would not comprise (or would have more limited quantities of) xanthan gum or more generally hydrocolloids. It is also possible that the powder formula comprises emulsifiers to improve the global suspensibility of the protein powder. To the same extent, it can be helpful to provide powder mix formulas with improved suspensibility that would not comprise (or would have more limited quantities of) emulsifiers. So, there is a need for new powder preparation for beverages using leguminous proteins that can solve these issues.

It also appears from above that there is a need to provide new leguminous proteins that allows the manufacture of powder preparation of beverage with improved sensation of creaminess, smoothness and/or lower chalkiness. It may also be helpful to provide ingredients that can decrease the number of ingredients in the formulation or lower the quantities of hydrocolloids and/or emulsifiers used in the powder mix formula. It is also needed that leguminous protein extracts provide to the powder mix increased suspensibility. One other objective of the invention is also to provide leguminous protein extracts that can render the powder mix beverages less foamy after shaking.

**Description of the invention**

It is one of the achievements of the invention to provide new powder preparation for beverages comprising new leguminous protein extracts displaying defined properties, these selected extracts providing improved texture, foaming and/or stability to the beverages.

Thus, in a first aspect, the invention provides a powder preparation for beverages comprising a leguminous protein extract, wherein the leguminous protein extract has a protein content, expressed on dry weight basis of the extract, of 75% or higher, a dry matter ranging from 90 to 100%, wherein the protein extract has a Turbiscan Stability Index TSI at the Middle Region TSIMR at 15 minutes below 5.0 and a rheometer viscosity going from 0.40 to 0.75 Pa.s, the viscosity being determined at 20°C, with a shear rate of 40s-1, on an aqueous suspension having 15% weight of dry matter.

In some embodiments, the leguminous protein extract included in the powder preparation for beverages has at least one of the following additional features:

- it has a mean particle size d50 size going from 10 to 400 microns or from 20 to 200 microns or 30 to 100 microns;

- it has a TSIMR at 15 minutes going from 0.5 to 3.0 or from 0.5 to 2.0;

- it has a rheometer viscosity going from from 0.42 to 0.75 Pa.s or from 0.45 to 0.70 Pa.s or from 0.48 to 0.65 Pa.s;

- it has CIE a*value that goes from -3 to +3;

- it has CIE b*value that goes from +10 to +20;

- it comprises sodium Na and potassium K in a molar ratio (Na/K) ranging from 10:90 to 90:10;

- it is a pea protein extract;

- it is denatured;

- its pH ranges from 8.0 to 9.5, for example from 8.5 to 9.4;

- its pH ranges from 5.0 to 8.0, for example from 6.0 to 8.0.

In some embodiments, the powder preparation for beverages has at least one of the following additional features:

- it comprises, based on the total weight of the powder preparation, 20 to 99% by weight of the leguminous protein extract and 1 to 80% of additional powder ingredients selected from hydrocolloids, emulsifiers, bulking agents, lipids, proteins other than the leguminous protein extract, antioxidants, enzymes, flavors, vitamins, minerals, colorings, sugars or sugar alcohols, high intensity sweeteners, probiotics and blends thereof;

- it comprises, based on the total weight of the powder preparation, from 50 to 98% by weight of the leguminous protein extract and from 2 to 50% of the additional powder ingredients or from 65 to 97% by weight of a leguminous protein extract and from 3 to 35% of additional powder ingredients;

- it is free of hydrocolloids and/or emulsifiers.

In a second aspect, the invention is a process of manufacturing a powder preparation for beverages of the invention wherein it comprises a step of dry blending of the leguminous protein extract.

In a third aspect, the invention concerns the use of the new leguminous protein extract for improving creaminess and/or for decreasing chalkiness of a powder preparation for beverages.

A fourth aspect of the invention is about a method of preparation of a beverage comprising the steps of:

- providing the powder preparation for beverages of the invention;

- providing a liquid;

- putting the liquid and the powder preparation in a recipient;

- shaking the recipient until the powder preparation is dispersed in the liquid to form the beverage.

The method of preparation of the leguminous protein extract as defined above can comprise the following steps:

i) preparing an aqueous solution of a leguminous protein extract;

ii) adjusting the pH of the solution of step i) to a value comprised in the range of from 8.0 to 9.5;

iii) heating the solution of step ii) at a temperature ranging from 80° C to 160° C during a time sufficient to reach the desired Turbiscan Stability Index and rheometer viscosity of the leguminous protein extract;

iv) optionally adjusting the pH of the solution of step iii) to a value comprised in the range of from 5.0 to 8.0;

v) recovering the obtained leguminous protein extract; and

vi) drying the obtained protein extract.

Alternatively, the leguminous protein extract of the powder preparation for beverages is a leguminous protein extract obtainable by the process of the invention.

## Description of the Figures

The Figure 1 represents the sensory evaluation of thickness for three different proteins in suspension: PURIS® P875 pea protein, EMPRO® E86 HV pea protein and the leguminous protein extract of the invention.

The Figure 2 represents the sensory evaluation of creaminess for three different proteins in suspension: PURIS® P875 pea protein, EMPRO® E86 HV pea protein and the leguminous protein extract of the invention.

The Figure 3 represents the sensory evaluation of mouthcoating for three different proteins in suspension: PURIS® P875 pea protein, EMPRO® E86 HV pea protein and the leguminous protein extract of the invention.

The Figure 4 represents the sensory evaluation of different texture attributes of three powder mix beverages, one comprising PURIS® P875 pea protein, one comprising PISANE® C9 pea protein and one comprising the leguminous protein extract of the invention.

The Figure 5 represents the sensory evaluation of different texture attributes of two powder mix beverages, one comprising NUTRALYS® S85F pea protein, and one comprising the leguminous protein extract of the invention.

## Detailed description of the invention

### Leguminous protein extract

By "leguminous protein extract" it is meant a protein extracted from a leguminous plant.
For the purposes of the present invention, the term "leguminous plants" means any plants belonging to the family Caesalpiniaceae, the family Mimosaceae or the family Papilionaceae, and preferably any plants belonging to the family Papilionaceae. It can be for instance pea, fava bean, mung bean, lentil, alfalfa, or lupin bean. Preferably, said leguminous plant is chosen from the group consisting of pea, fava bean and mung bean. Even more preferably, said leguminous plant is pea.
According to the invention, the term "pea" is herein considered in its broadest accepted sense and includes in particular:

- all varieties of "smooth pea" and of "wrinkled pea", and

- all mutant varieties of "smooth pea" and of "wrinkled pea", this being whatever the uses for which said varieties are generally intended (food for human consumption, animal feed and/or other uses).

In the present disclosure, the term "pea" includes the varieties of pea belonging to the Pisum genus and more particularly Pisum sativum.

Said mutant varieties are in particular those known as "r mutants", "rb mutants", "rug 3 mutants", "rug 4 mutants", "rug 5 mutants" and "lam mutants" as described in the article by C-L HEYDLEY et al. entitled "Developing novel pea starches", Proceedings of the Symposium of the Industrial Biochemistry and Biotechnology Group of the Biochemical Society, 1996, pp.77-87.

In a preferred embodiment, the pea is derived from smooth pea, in particular yellow smooth pea.

The term "protein" as used in the present disclosure, refers to large biomolecules, or macromolecules, consisting of one or more long chains of amino acid residues. Like all leguminous-plant proteins, pea proteins consist of three main classes of proteins: globulins, albumins, and "insoluble" proteins. In a preferred embodiment, the pea protein comprises mainly pea globulins, i.e. pea globulins are the major protein. Generally, the pea protein comprises at least 50% of pea globulins based on the dry weight of the total pea protein, preferably at least 75%.

According to the present invention, the protein extract may be a protein isolate or a protein concentrate, preferably a protein isolate. As an example, the pea protein extract may be a pea protein isolate or a pea protein concentrate. Protein isolates have generally a richness of at least 80%, e.g. from 80% to 95%, whereas protein concentrates have generally a richness going from 50% to 80%. The protein extract useful for the invention can be a protein concentrate having a richness ranging from 75% to 80%. Preferably, the protein content, expressed on dry weight basis of the extract goes from 80 to 90% of protein N6.25. The percentage by weight of protein N6.25 (i.e. richness) can be determined using the DUMAS method according to standard ISO 16634.

Pea protein extract presents a richness of at least 75%. The richness of the pea protein is according to the present disclosure is the percentage by weight of protein N6.25 based on the total dry weight of the pea protein. Advantageously, the richness of the pea protein is at least 80%, preferably of at least 85%. In an embodiment, the protein content, expressed on dry weight basis of the extract goes from 80 to 90% of protein N6.25.

The leguminous protein extract of the invention has a dry matter ranging from 90 to 100%. The dry matter can be calculated by any relevant method, including AOAC Official Method of Analysis 925.10, Solids (Total) and Loss on Drying (Moisture) in Flour.

According to the invention, the leguminous protein extract has a Turbiscan Stability Index TSI at the Middle Region TSIMR at 15 minutes below 5.0.

Turbiscan is a well-known apparatus that allows one to determine the suspensibility of a suspension during time. The Turbiscan apparatus records and provides 3 values: one Turbiscan Stability Index for the Top Region, one Turbiscan Stability Index for the Middle Region, one Turbiscan Stability Index for the Bottom Region. Averages of these 3 values represent the global Turbiscan Stability Index TSI. In the case of evaluation of the protein, because foam is present at the top of every sample, Turbiscan Stability Index at the top Region of the measurement cellare more representative of the foam stability kinetics and less representative of the suspensibility and sedimentation of the protein. Average of Turbiscan Stability Index of Middle Region is more accurate to represent the suspensibility of the protein powder inside a powder shake. The different TSI at 15 minutes are reported. Turbiscan Stability Index analysis are conducted on an aqueous suspension at 6.5% of weight of protein N6.25. A detailed protocol to determine TSI is reported in the example section.

Preferably, the leguminous protein has a TSIMR at 15 minutes going from 0.5 to 3.0 or from 0.5 to 2.0.

Preferably, the leguminous protein has a TSIBR at 15 minutes going from 0.5 to 3.0 or from 0.5 to 2.0. The TSIBR is more representative of the sedimentation of the protein at the bottom of a shaker. The TSI at 15 minutes of the leguminous protein can be up to 4.0, for example from 0.5 to 3.5.

The rheometer viscosity can be determined at 20°C using a rheometer at a frequency of 40 s-1 by using a solution of the leguminous protein extract having 15% of dry matter. Rheometers helpful to determine the rheometer viscosity include a rheometer equipped with a concentric cylinder measuring system used in rotational mode. It can be Anton Paar Model MCR92 equipped with CC39 measuring system. In the Examples section can be found details on the sample preparation and on the equipment that can be used, with details on the program.

Preferably, the leguminous protein extract has a rheometer viscosity going from 0.42 to 0.75 Pa.s or from 0.45 to 0.70 Pa.s or from 0.48 to 0.65 Pa.s.

In some embodiments, the leguminous protein extract comprises sodium Na and potassium K in a molar ratio (Na/K) ranging from 10:90 to 90:10 or ranging from 40:60 to 60:40.

In some embodiments, the leguminous protein extract comprises, based on the total dry mass of the extract, a total content of sodium Na and potassium K ranging from 10000 to 50000 ppm, for example from 15000 to 40000 ppm, preferably from 18000 to 30000 ppm. The molar ratios (Na/K) of these leguminous protein extracts can be such as described above.

Sodium and potassium quantification is well known to the man skilled in chemistry and biochemistry field, and he will know all suitable analytical methods that allow quantifying sodium and potassium content. In the context of the present disclosure, the use of flame absorption spectrometer is preferred.

In another preferred embodiment, the protein contained in the leguminous protein extract is denatured, notably by performing a heat treatment under basic conditions, more specifically under a pH comprised in the range of from 8 to 9.5, for a sufficient time to obtain an increase of the gel strength or gel firmness. Denaturation of the protein can be assessed by any suitable method, such as differential scanning calorimetry (DSC). The determination can be done using DSC by heating a sample of the leguminous protein extract at a heating rate of 10°C/min. One method is described in the examples section. Preferably, the denaturation enthalpy is lower than 0.1 J/g, preferably lower than 0.05 J/g, most preferably is equal to 0 J/g.

Preferably, the protein contained in the leguminous protein extract is not hydrolyzed. Preferably, the leguminous protein extract has a degree of hydrolysis below 6, for example between 3 and 5.5. The degree of hydrolysis of a protein is representative of the length of the amino-acids chains in the protein. The DH is known by the skilled person in the art and different methods exist to determine it. The degree of hydrolysis DH can be determined using the following equation:

$$DH = \frac{\text{Amino nitrogen (\%)} \times 100}{\text{Protein nitrogen (\%)}}$$

in which the protein nitrogen is determined according to the DUMAS method according to standard ISO 16634 and amino nitrogen is determined using the MEGAZYME kit (reference K-PANOPA).

In one embodiment, the leguminous protein extract has a pH which ranges from 8.0 to 9.5, for example from 8.5 to 9.4.

In another embodiment, the leguminous protein extract has a pH which ranges from 5.0 to 8.0, for example from 6.0 to 8.0.

The pH of the leguminous protein extract can be made by determination of the pH at room temperature of a protein aqueous suspension prepared from the protein extract, this suspension having a dry matter of 5% or 10%, preferably 10%. In the range going from 5% to 10%, the pH can be considered equivalent whatever the dry matter is. The pH can be determined as indicated in the Examples section.

The leguminous protein extract is generally a powder. It may be a spray-dried powder or a freeze-dried powder, preferably spray dried powder. The powder can have a mean particle size d50 size going from 10 to 400 microns or from 20 to 200 microns or 30 to 100 microns. Several methods can be used for measuring particle size and particle size distribution. Some of them are based on light, or on ultrasound, or electric field, or gravity, or centrifugation. The use of sieves is a common measurement technique. In the present application, the use of laser diffraction method is preferred. As for "mean particle size" (d50) determined by laser diffraction, this mean particle size is a volume-weighted mean particle size. The skilled person will be able to select a laser diffraction method allowing him to obtain an accurate mean particle size determination. For example, d50 can be measured by a laser granulometry apparatus (Mastersizer 3000, from Malvern), which measures intensity of scattered light across a range of scattering angles using forward scattering measurement, on a dry powder without dispersion buffer, and using the software of the apparatus with the Mie scattering model to fit the distribution to the measured scattering pattern.

The leguminous protein extract may have a CIE a*value that goes from -3 to +3 and/or b*value that goes from +10 to +20. The CIELAB color space, also referred to as L*a*b*, is a color space defined by the International Commission on Illumination (abbreviated CIE) in 1976. It expresses color as three values: L* for perceptual lightness and a* and b* for the four unique colors of human vision: red, green, blue and yellow. The a* and b* values are determined on an aqueous suspension at 6.5% of weight of protein N6.25. The a* and b* values may be determined using Konica Minolta CM-5 Colorimeter with the following test Conditions: D65/ 10°. A detailed protocol to determine a* and b* is reported in the example section.

In an embodiment, the leguminous protein extract of the powder preparation for beverages is an acid-gelling leguminous protein, for example a leguminous protein extract having a protein content, expressed on dry weight basis of the extract, of 75% or higher and a storage modulus of at least 1800 Pa, advantageously at least 2000 Pa when determined using TEST A, preferably at least 2500 Pa. As used herein, the expression "storage modulus" refers to the gel strength and may be determined by using the test A, defined hereafter in the Example section. The ratio between the storage modulus (G') of the alkaline heat-treated protein extract of the invention and the storage modulus (G') of the neutral pH heat treated protein extract corresponds to the "gel strength ratio". It therefore reflects the improvement of the gel strength (or storage modulus) of the protein extract which is obtained by heat treating the protein extract under alkaline conditions compared to the same protein extract subjected to the same process of the invention except that the heat treatment step is performed under neutral conditions (pH = 7.0) instead of alkaline conditions. The acid-gelling leguminous protein extract can have a firmness of at least 100g when determined using TEST B, advantageously at least 125g, preferably at least 150g. As used herein, the term "firmness" refers to a textural parameter of the acid-gelling protein extract and is calculated from the peak force during compression of the acid-gelling protein extract in a compression assay, such as that disclosed in the TEST B provided in the Example section. The ratio between the firmness of the alkaline heat-treated protein extract of the invention and the firmness of the neutral pH heat treated protein extract corresponds to the "firmness ratio". It therefore reflects the improvement of the firmness which is obtained by heat treating the protein extract under alkaline conditions compared to the same protein extract subjected to the exactly the same process of the invention except that the heat treatment step is performed under neutral conditions (pH = 7.0) instead of alkaline conditions.

*Other powder ingredients useful for powder preparation for beverages*

The powder preparation for beverages of the invention generally comprises additional powder ingredients. These can be selected from hydrocolloids, emulsifiers, bulking agents, lipids, proteins other than the leguminous protein extract, amino acid ingredients, antioxidants, enzymes, flavors, vitamins, minerals, colorings, sugars or sugar alcohols, high intensity sweeteners, probiotics and blends thereof.

Hydrocolloids can act as thickeners and/or stabilizers of the powder preparation for beverages. Hydrocolloids can be starch-based, these are derived from various plant sources such as corn, potatoes, wheat, and tapioca. These are generally modified starches, physically as for example pregelatinized starch and/or chemically as for example. Hydrocolloids also can be gums which are natural polysaccharides generally extracted from plants or produced by bacterial fermentation. Examples include xanthan gum, guar gum, locust bean gum and gum arabic. Other hydrocolloids comprise gelatin and its derivatives. Gelatin is a protein-based hydrocolloid derived from animal collagen. Other hydrocolloids comprise agar-agar which is a natural, plant-based alternative to gelatin derived from red seaweed, agar-agar forms a firm gel when dissolved in water and heated, contributing to mouthfeel and consistency. Hydrocolloids may be carrageenans which may be obtained from seaweed, for example extracted from red seaweed species. Hydrocolloids also include alginates which are generally obtained from brown seaweeds. Another sort of hydrocolloids includes cellulose derivatives. These may be methylcellulose, hydroxypropyl methylcellulose (HPMC), and carboxymethyl cellulose (CMC). Typical usage will depend on the hydrocolloid(s) selected. The powder preparation for beverages of the invention can comprise 0 to 10% of its total weight of hydrocolloids, generally from 0.1 to 2%.

Emulsifiers can impact mouthfeel and emulsification in food applications. Examples include lecithin such as soy or sunflower lecithin or egg yolk lecithin and mono- and diglycerides. They contribute to the stability of emulsions and can enhance mouthfeel in certain formulations.

Bulking Agents are used to increase the volume and improve the texture of protein powders but also can be used for nutritional purposes. These can be dietary fibers that mainly used for health benefits and aid in digestion. Dietary fibers include resistant maltodextrin, soluble corn fiber, isomalto-oligosaccharides, oligofructose, inulin, fructans and polydextrose. These also can be starch hydrolysates solids, corn syrup solids and maltodextrins which can be used as a source of energy. Typical usage can vary widely depending on the intended use of the powder preparation for beverages. The powder preparation for beverages of the invention can comprise 0 to 50% of its total weight of bulking agents, generally from 4 to 40%, or 5 to 20%.

Lipids, such as MCT (medium-chain triglyceride) oil or high oleic sunflower oil, are available in powder form. They can be added to protein powders to provide a source of healthy fats and improve the texture and mouthfeel. MCT oil, derived from coconut or palm kernel oil, is advertised as easily absorbed and metabolized by the body, providing a quick source of energy. Typical usage can range from 0 to 30%, for example from 1 to 20% of the total weight of the powder preparation for beverages.

Proteins other than the leguminous protein extract include other leguminous proteins different from the one of the invention, especially pea, fava bean, mung bean, lentil, alfalfa, or lupin bean proteins. It can be another source of protein and other plant proteins and/or animal proteins. The term "plant protein" denotes all the proteins derived from cereals, oleaginous plants, and tuberous plants, and also all the proteins derived from algae and microalgae or fungi, used alone or as a mixture, chosen from the same family or from different families. In the present application, the term "cereals" is intended to mean cultivated plants of the grass family producing edible grains, for instance wheat, rye, barley, maize, sorghum, or rice. The cereals are often milled in the form of flour, but are also provided in the form of grains and sometimes in whole-plant form (fodders). NUTRALYS® W, which is wheat protein extract commercialized by the Applicant, can be cited as example of wheat protein source. NUTRALYS® RICE I800XF and NUTRALYS® RICE I850XF, which are rice protein extracts commercialized by the Applicant, can be cited as example of rice protein sources. Brown rice proteins can also be used. In the present application, the term "tubers" is intended to mean all the storage organs, which are generally underground, which ensure the survival of the plants during the winter season and often their multiplication via the vegetative process. These organs are bulbous owing to the accumulation of storage substances. The organs transformed into tubers can be the root e.g. carrot, parsnip, cassava, konjac), the rhizome (e.g. potato, Jerusalem artichoke, Japanese artichoke, sweet potato), the base of the stalk (more specifically the hypocotyl, e.g. kohlrabi, celeriac), the root and hypocotyl combination (e.g. beetroot, radish). These plant proteins can also be soy protein, hemp protein, quinoa protein or chia protein. The animal protein can be for example egg or milk proteins, such as whey proteins, casein proteins or caseinate or milk protein concentrate. Typical usage of proteins will greatly depend on the desired formulation and can range widely from 0 to 90% of the total weight of the powder preparation for beverages. The powder preparation for beverages of the invention preferably comprises from for example from 0 to 50% of the total weight of the powder preparation for beverages, for example from 1 to 30% or 2 to 20% or 3 to 10%. Preferably, the weight ratio leguminous protein extract/proteins other than the leguminous protein extract is 50/50 to 100/0, for example 65/35 to 100/0 or for example 80/20 to 100/0.

Amino acid ingredients, such as branched-chain amino acids. BCAAs are a group of three essential amino acids: leucine, isoleucine, and valine. Amino acid ingredients are often added to protein powders, especially those targeting athletes and bodybuilders, to promote muscle recovery, reduce muscle soreness, and support muscle growth. Typical usage of amino acid ingredients can range from 0 to 15%, for example from 1 to 10% of the total weight of the powder preparation for beverages.

The leguminous protein extract can thus be used in combination with one or more of these proteins other than the leguminous protein extract or amino acids ingredients to improve the nutritional properties of the final product, for example to improve the PDCAAS of the powder preparation for beverages. In one embodiment, a rice protein extract is used in the powder preparation for beverages in combination with the leguminous protein extract. Preferably, these are used in quantities such that the rice protein extract/leguminous protein extract dry weight ratio goes from 10 : 90 to 50 : 50, for example from 20 : 80 to 40 : 60.

Antioxidants are substances that help protect cells from oxidative damage caused by free radicals. They can be derived from various natural sources such as fruits, vegetables, herbs, mushrooms and spices. Incorporating antioxidants into protein powder blends can offer additional health benefits and potentially extend the shelf life of the product by slowing the rate of oxidation. It can be rosemary extract: Derived from the rosemary plant, this antioxidant-rich extract is known for its ability to protect lipids from oxidation, thereby helping to preserve the freshness and stability of certain flavors and lipid blends in protein powders. It can be green tea extract: Obtained from the leaves of the Camellia sinensis plant, green tea extract is rich in antioxidants called catechins, which can help support overall health and reduce oxidative stress. It can be fruit and vegetable extracts: Concentrated extracts from various fruits and vegetables, such as blueberries, strawberries, spinach, and kale, can provide a wide range of antioxidant benefits and contribute to the overall nutritional profile of protein powders. Typical usage will depend on the antioxidant(s) selected. The powder preparation for beverages of the invention can comprise 0 to 10% of its total weight of antioxidant, e.g. from 0.1 to 2%.

Enzymes that can be used include protease and other digestive enzymes that may be added to protein powders to support digestion and absorption. The powder preparation for beverages of the invention can comprise 0 to 1 % of its total weight of enzymes, for example from 0.1 to 0.5% of the blend.

Flavors may be natural or artificial flavors: These are added to improve the taste and palatability of protein powders. Typical usage depends on how concentrated the flavor(s) is used. It can be for example chocolate flavor, caramel flavor, vanilla flavor, fruit flavor or spices. The powder preparation for beverages of the invention can comprise 0 to 10% of its total weight of flavor, e.g. from 0.01 to 5%.

Vitamins and minerals can also be added to the powder preparation for beverages to enhance their nutritional profiles. The powder preparation for beverages of the invention can comprise 0 to 10% of its total weight of vitamins and minerals, for example from 0.1 to 5%.

Colorings may be natural or artificial. They may be added to protein powders to enhance their visual appeal. The powder preparation for beverages of the invention can comprise 0 to 2% of its total weight of colorings, for example from 0.1 to 1%.

Sugars, that are available in powder form, may be for example sucrose, glucose, maltose, fructose, allulose, isomaltulose or agave powder. Sugar alcohols, that are available in powder form, include sorbitol, maltitol, glycerine, xylitol, isomalt or erythritol. Typical usage of total sugars and sugar alcohol ingredients can range from 0 to 40%, for example from 1 to 30% or from 1 to 10% of the total weight of the powder preparation for beverages.

High-Intensity Sweeteners: Both natural (e.g., stevia, monk fruit) and artificial (e.g., sucralose, aspartame) sweeteners are used to enhance the taste of protein powders. The powder preparation for beverages of the invention can comprise 0 to 5% of its total weight of high-intensity sweeteners, for example from 0.1 to 3% of the blend.

Probiotics are live microorganisms that promote a healthy balance of gut bacteria and support digestive health. They can be added to protein powders to enhance their nutritional profiles. Typical usage can vary: 1-10 billion CFUs (colony-forming units) per serving are common.

The powder preparation for beverages of the invention may vary broadly in composition, depending on the nutritional benefits expected. The powder preparation for beverages of the invention may comprise 20 to 99% by weight of the leguminous protein extract and 1 to 80% of additional powder ingredients based on the total weight of the powder preparation. Preferably, the powder preparation for beverages comprises from 50 to 98% by weight of the leguminous protein extract and from 2 to 50% of the additional powder ingredients or from 65 to 97% by weight of a leguminous protein extract and from 3 to 35% of additional powder ingredients.

In an embodiment, the powder preparation for beverages of the invention is free of hydrocolloids and/or emulsifiers.

One advantage of the invention is that the powder mix can present high suspensibility even in absence of emulsifiers and/or hydrocolloids.

In another embodiment, the powder preparation for beverages of the invention is free of protein from animal proteins or free from any ingredient from animal origin.

In one embodiment, the powder preparation for beverages has a Turbiscan Stability Index TSI at the Middle Region TSIMR at 15 minutes below 2.5. The suspensibility is determined on an aqueous suspension of the powder preparation for beverages at 6.5% of weight of protein N6.25. The detailed protocol to determine TSI reported in the example section can be used.

The powder preparation for beverages preferably has a mean particle size d50 size going from 10 to 400 microns or from 20 to 200 microns or 30 to 100 microns.

To measure the RVA viscosity of the protein powder mix beverage, the protein powder mix is added to water to achieve a final protein content concentration of 6.5% by weight (calculated as protein N6.25). The analysis is conducted at 20°C, with the mixture being stirred at a rate of 160 rpm. The RVA viscosity is recorded as the final measurement after a consistent mixing period of 5 minutes. RVA viscosity analysis is conducted on the aqueous suspension 15 minutes after the blend of the protein extract with water: during that period, the protein extract is hydrated until equilibrium. A detailed protocol to determine RVA viscosity is reported in the example section. The RVA viscosity of the powder preparation for beverages can vary broadly depending on the composition. It can range from 50 cP to 150 cP or from 70 to 120 cP.

In another embodiment, the powder preparation for beverages has a pH which ranges from 5.5 to 9.5, for example from 6.0 to 9.0.

The pH of the powder preparation for beverages can be determined with the same method than the leguminous protein extract. It can be determined at room temperature on a suspension in water of a powder preparation for beverages having a dry matter 10%.

Another embodiment of the invention pertains to a process of manufacturing a powder preparation for beverages of the invention wherein it comprises a step of dry blending of the leguminous protein extract. The dry blending step may be in presence of the additional powder ingredients. To proceed to the dry blending step, any kind of apparatus such as ribbon blender, paddle mixer, V-blender, double cone blender, tumble blender, fluidized bed mixer, plow mixer, screw mixer, high-shear mixer, planetary mixer. These blenders may also be able to add onto the powders some liquids such as liquid favors, to coat or agglomerate the powder at least partially to improve its flowability, appearance, handling and/or storage. There will be no difficulty for the skilled person to conduct the process of the invention by using the leguminous protein extract into the same processes known from the prior art.

Another embodiment of the invention concerns the use of the leguminous protein extract for improving creaminess and/or for decreasing chalkiness of a powder preparation for beverages.

According to the invention, the terms "the use for improving" means to use the leguminous protein extract useful to the invention in order to obtain an increase of the sensory attribute of the powder preparation for beverages. According to the invention, the terms "the use for decreasing" means to use the leguminous protein extract useful to the invention in order to obtain a lowering effect on the sensory attribute of the powder preparation for beverages.

According to the invention, the term "creaminess" means the degree of combined qualities of being homogeneous, smooth, and thick texture. Double cream is to be considered as having creaminess. The term chalkiness means when particles are perceived in mouth during and after the tasting. Suspension of wheat starch in water (10%) is to be considered as having chalkiness.

Sensory attributes may be determined by a trained or expert panel.

Another embodiment of the invention pertains to a beverage comprising the powder preparation for beverages of the invention and a liquid.

The beverage can advantageously comprises from 3 to 25% by weight of powder preparation based on the total weight of the beverage, preferably from 5 to 20%.

Another embodiment of the invention pertains to a method of preparation of a beverage comprising the steps of:

- providing the powder preparation for beverages of the invention;

- providing a liquid;

- putting the liquid and the powder preparation in a recipient;

- shaking or blending the content of the recipient until the powder preparation is dispersed in the liquid to form the beverage.

Beverages can have a liquid-like and smooth texture or can have a thicker texture, for example a smoothie-like texture.

The liquid useful for the preparation of the beverage may be any kind of liquid allowing the production of a beverage, generally non-gaseous liquids. It may be water, fruit juice, legume juice, animal milk, plant-based milk, coconut water, liquid yogurt, coffee, iced coffee, tea, iced tea and blends thereof.

The beverage can comprise from 50 to 97% of liquid based on the total weight of the beverage, preferably from 75 to 97%, for example from 80 to 95%.

The recipient may be a protein shaker. The powder preparation of beverages of the invention is fully adapted to provide a beverage with improved sensory attributes by simply putting the liquid and the powder preparation in a protein shaker, and then by shaking the content of the recipient. The protein shaker is fully adapted for this way to prepare, for example, a beverage for sport nutrition or for medical nutrition.

Alternatively, the recipient can also be adaptable to be blender. This recipient is fully adapted to prepare a beverage by blending the protein powder with one liquid and eventually one additional ingredient. Additional ingredients include fresh fruits or vegetables, dried fruits or vegetables, canned fruits or vegetables, nuts, seeds, grains, uncooked eggs, yogurts, ice cream or cheese. Electric blenders or mixers can be used to make the beverages. The quantity of additional ingredients generally do not exceed 40% for example from 0 to 20%.

The process for manufacturing the leguminous protein extract will be described into details below. One of the advantages is that process does not need the use of any organic solvent. In an embodiment, the leguminous protein extract is free from organic solvent. The leguminous protein extract may also be free of gelatinized starch.

_Method of preparation of a protein extract_

The method of preparation of a leguminous protein extract as defined above, comprises the following steps:

i) preparing an aqueous solution of a leguminous protein extract;

ii) adjusting the pH of the solution of step i) to a value comprised in the range of from 8.0 to 9.5;

iii) heating the solution of step ii) at a temperature ranging from 80° C to 160° C during a time sufficient to reach the desired Turbiscan Stability Index and rheometer viscosity of the leguminous protein extract;

iv) optionally adjusting the pH of the solution of step iii) to a value comprised in the range of from 5.0 to 8.0;

v) recovering the obtained leguminous protein extract; and

vi) drying the obtained protein extract.

_Step i)_

In step i), an aqueous solution of a leguminous protein extract is prepared. The solid content of the aqueous solution may be comprised in the range of from 5 to 20 %, notably of from 10 to 15%.

The leguminous protein extract implemented in step i) may be obtained from the corresponding leguminous plant seeds, notably according to a process comprising the steps of:

- providing leguminous plant seeds containing a leguminous protein;

- milling said leguminous plant seeds and suspending the obtained flour in a liquid, in particular in an aqueous solution;

- recovering the leguminous protein from the suspension, thereby obtaining a leguminous protein extract.

The milling step may be performed according to well-known methods, notably according to a dry or wet process. Dry process generally comprises a step of milling leguminous plant seeds to form a leguminous flour and at least one step of fractionation of the flour, generally by air classification or by sieving, the finer fraction obtained being richer in protein. Generally, the wet process to obtain a leguminous protein comprises a step of providing a suspension of flour in water, at least one step of separation to remove insoluble starch and fiber from the suspension to obtain a soluble protein-rich liquid fraction and a step of isolation of the leguminous proteins. The suspension of flour can be obtained by dry grinding or wet grinding of the leguminous plant seeds. The separation step can be done using separation devices such as hydrocyclones, decanters, centrifugators or combination thereof. The step of isolation can contain a step of precipitation of the proteins at the isoelectric point followed by a step of centrifugation or a step of filtration using membrane. Examples of preparation of a leguminous protein extract, notably of pea protein extract, are notably disclosed in WO2007/017572, WO2011/124862 or WO2019/053387.

The leguminous protein extract, notably the pea protein extract, implemented in step i), can be in a powder form or in the form of a liquid suspension. In the case of liquid suspension, the suspension is generally an aqueous liquid suspension. Powder forms may be obtained after drying of a leguminous protein suspension with methods such as freeze drying or spray drying.

As an example, commercial products such as the ones commercialized by the applicant under the brand NUTRALYS® can be used in step i) as a pea protein extract, such as NUTRALYS®S85F or NUTRALYS®F85M.

Typically, the pea protein can be obtained by resuspending pea flour in water, separating and recovering the soluble material by centrifugation, adjusting at an acidic pH (e.g. at a pH ranging from 4.0 to 5.5) the soluble material to precipitate the protein contained in the soluble material and optionally heating the soluble material (e.g. at a temperature going from 55 to 75°C) during, before or after the acidification and subjecting to a further centrifugation in order collect the underflow comprising pea protein.

### *Step ii)*

In step ii), the pH of the aqueous suspension obtained in step i) is adjusted to a value comprised in the range of from 8.0 to 9.5.

In some embodiments, the pH of the aqueous suspension obtained in step i) is adjusted to a value comprised in the range of from 8.0 to 8.5; from 8.5 to 9.0; from 9.0 to 9.5; or preferably from 8.2 to 8.8 or around 8.5. It has been found that within the preferred ranges of pH values, the leguminous protein extract obtained displays better color and taste compared to when the alkaline treatment is performed at a higher pH, notably higher than 9.5.

As used herein, the term "around" a value means that value $\pm$ 5%, notably 3%, or 1%.

To adjust the pH, any kind of caustic solutions that can be used for food ingredient manufacturing can be used. Examples of caustic solutions include notably sodium hydroxide, potassium hydroxide and/or calcium hydroxide.

In an embodiment, step ii) is performed by adding to the solution of step i), a mixture of sodium hydroxide and potassium hydroxide, preferably in a (NaOH/KOH) molar ratio ranging from 10:90 to 90:10. In a preferred embodiment, this pH adjustment is performed by adding an aqueous solution of sodium and/or potassium hydroxide, preferably an aqueous solution containing both sodium and potassium hydroxide in a molar ratio ranging from 10:90 to 90:10, most preferably ranging from 40:60 to 60:40.

Surprisingly, it has been discovered by the applicant that the use of a combination of sodium and potassium hydroxide to adjust the pH enabled to further improve the gel properties, notably the firmness, as compared to sodium or potassium hydroxide alone.

### *Step iii)*

In step iii), the suspension of step ii) is heated at a temperature ranging from 80°C to 160°C during a time sufficient to reach the desired Turbiscan Stability Index and rheometer viscosity of the leguminous protein extract. Preferably, the temperature during the heating step iii) ranges from 120 to 150°C.

The time of the heating step iii) may notably range from 0.1 second (s) to 10 minutes (min), preferably from 0.1 s to 1 min, notably from 0.5 s to 50 s, preferably from 1 s to 40 s, most preferably from 2 s to 30 s or 5 s to 20 s.

At the end of step iii), the suspension is generally cooled, notably down to a temperature ranging from 50 to 95°C, preferably ranging from 60 to 85°C. The cooling may be performed by flash cooling.

### *Step iv)*

The method of preparation of the protein extract may further comprise a step iv) consisting in adjusting the pH of the heat-treated suspension of step iii) to a value ranging from 5.0 to 8.0, notably from 5.0 to 6.0; from 6.0 to 7.0 or from 7.0 to 8.0.

The acidification step iv) may notably be performed by adding hydrochloric acid to the suspension obtained further to step iii).

Step iv) may notably be performed after cooling of the suspension obtained in step iii).

This step iv) allows to modify the pH of the leguminous protein extract of the invention. Any kind of food grade acids can be used for this optional step, such as hydrochloric acid or citric acid.

*Step v)*

The method of preparation of the protein extract according to the invention further comprises a step of recovering the obtained leguminous protein extract.

*Step vi)*

The method of preparation of the protein extract according to the invention comprises a step of drying the recovered leguminous protein extract.

Step vi) may notably be performed by spray-drying, or freeze-drying.

Step vi) may be performed under conditions enabling to obtain a leguminous protein extract having a moisture content of less than 10%, notably of less than 7%, relative to the total weight of the leguminous protein extract.

Step vi) may be performed under conditions enabling to obtain the desired particle size distribution and especially the desired d50. The method of preparation may also comprise an additional step of grinding and/or a step of sieving to decrease the particle size.

In another aspect which is not claimed in this patent application, the new leguminous protein extract is prepared by a method of preparation, comprising the following steps:

i) preparing an aqueous solution of a leguminous protein extract;

ii) adjusting the pH of the solution of step i) to a value comprised in the range of from 8.0 to 9.5;

iii) heating the solution of step ii) at a temperature ranging from 80° C to 160° C during a time sufficient to increase the storage modulus of the leguminous protein extract;

iv) optionally adjusting the pH of the solution of step iii) to a value comprised in the range of from 5.0 to 8.0;

v) recovering the obtained leguminous protein extract; and

vi) drying the obtained protein extract.

*Other uses of the leguminous protein extract*

Below are described different uses of leguminous protein extract, including uses that are not claimed in the present document.

The leguminous protein extract can be used in food products, especially food products, such as yogurts, cheeses, acidic spreads such as margarine, butter alternative, jam, or marmalade, acidic beverages especially acidic jelly beverage, jelly, sour cream, *crème fraîche,* whipping cream or acidic sauces. One further aspect is a method of improving the acid-gelling properties of a food product, the food product comprising a leguminous protein extract, notably a pea protein extract. Acid-gelling food products can have a pH of 3 to 6 when diluted at a dry matter of 10%. The leguminous protein extract can be used to form a milk, which is fermented and/or acidified to provide yogurts and cheeses. These milks can present a dry matter going from 5 to 30%. These milks can comprise other components such as sugars, fats and optional ingredients. Yogurts can include stirred yogurts, set yogurts or yogurts to drink. These can be flavored or not and can include other components such as fruit preparations and/or sweeteners. Cheeses can be analogues of process cheese, swiss cheese, string cheese, ricotta, soft-rippened cheeses such as camembert, Munster or brie, provolone, parmesan, mozzarella, jack, manchego, blue, fontina, feta, edam, double Gloucester, cheddar, asiago and Havarti. Acidic sauces are for example mayonnaise or ketchup. All these food-products can be vegan food products or can comprise some amount of ingredients from animal origin.

The leguminous protein extract of the invention can be used in food and beverage products that may include the leguminous protein extract in an amount of up to 100% by weight relative to the total dry weight of the food or beverage product, for example in an amount of from around 1 % by weight to around 80% by weight relative to the total dry weight of the food or beverage product. All intermediate amounts (i.e. 2%, 3%, 4%... 77%, 78%, 79% by weight relative to the total weight of the food or beverage product) are contemplated, as are all intermediate ranges based on these amounts. Food or beverage products which may be contemplated in the context of the present invention include baked goods; sweet bakery products (including, but not limited to, rolls, cakes, pies, pastries, and cookies); pre-made sweet bakery mixes for preparing sweet bakery products; pie fillings and other sweet fillings (including, but not limited to, fruit pie fillings and nut pie fillings such as pecan pie filling, as well as fillings for cookies, cakes, pastries, confectionary products and the like, such as fat-based cream fillings); desserts, gelatins and puddings; frozen desserts (including, but not limited to, frozen dairy desserts such as ice cream - including regular ice cream, soft serve ice cream and all other types of ice cream - and frozen non-dairy desserts such as non- dairy ice cream, sorbet and the like); carbonated beverages (including, but not limited to, soft carbonated beverages); non-carbonated beverages (including, but not limited to, soft non-carbonated beverages such as flavored waters, fruit juice and sweet tea or coffee based beverages); beverage concentrates (including, but not limited to, liquid concentrates and syrups as well as non-liquid 'concentrates', such as freeze-dried and/or powder preparations); snack bars (including, but not limited to, cereal, nut, seed and/or fruit bars); bread products (including, but not limited to, leavened and unleavened breads, yeasted and unyeasted breads such as soda breads, breads comprising any type of wheat flour, breads comprising any type of non-wheat flour (such as potato, rice and rye flours), gluten-free breads); pre-made bread mixes for preparing bread products; sauces, syrups and dressings; sweet spreads (including chocolate, nut spreads and other spreadable preserves, conserves and the like); confectionary products (including, but not limited to, jelly candies, soft candies, hard candies, chocolates and gums); sweetened and un sweetened breakfast cereals (including, but not limited to extruded breakfast cereals, flaked breakfast cereals and puffed breakfast cereals); and cereal coating compositions for use in preparing sweetened breakfast cereals. Other types of food and beverage product not mentioned here but which conventionally include one or more nutritive sweetener may also be contemplated in the context of the present invention. In particular, animal foods (such as pet foods) are explicitly contemplated. It can also be used, eventually after texturization by extrusion, in meat-like products such as emulsified sausages or plant-based burgers. It can also be used in egg replacement formulations. The food or beverage product can be used in specialized nutrition, for specific populations, for example for baby or infants, elderly people, athletes, or in clinical nutrition (for example tube feeding or enteral nutrition).

In these food products and especially acid-gelling food products, the leguminous protein extract can be the sole source of protein. Alternatively, the leguminous protein extract is used in combination with another source of protein and can be used in combination with other plant and/or animal proteins. The term "plant protein" denotes all the proteins derived from cereals, oleaginous plants, leguminous plants and tuberous plants, and also all the proteins derived from algae and microalgae or fungi, used alone or as a mixture, chosen from the same family or from different families. In the present application, the term "cereals" is intended to mean cultivated plants of the grass family producing edible grains, for instance wheat, rye, barley, maize, sorghum or rice. The cereals are often milled in the form of flour, but are also provided in the form of grains and sometimes in whole-plant form (fodders). NUTRALYS® W, which is wheat protein extract commercialized by the Applicant, can be cited as example of wheat protein source. NUTRALYS® RICE I800XF and NUTRALYS® RICE I850XF, which are rice protein extracts commercialized by the Applicant, can be cited as example of rice protein sources. In the present application, the term "tubers" is intended to mean all the storage organs, which are generally underground, which ensure the survival of the plants during the winter season and often their multiplication via the vegetative process. These organs are bulbous owing to the accumulation of storage substances. The organs transformed into tubers can be the root e.g. carrot, parsnip, cassava, konjac), the rhizome (e.g. potato, Jerusalem artichoke, Japanese artichoke, sweet potato), the base of the stalk (more specifically the hypocotyl, e.g. kohlrabi, celeriac), the root and hypocotyl combination (e.g. beetroot, radish). The animal protein can be for example egg or milk proteins, such as whey proteins, casein proteins or caseinate. The leguminous protein extract can thus be used in combination with one or more of these proteins or amino acids in order to improve the nutritional properties of the final product, for example to improve the PDCAAS of the protein or to bring other or modify functionalities. In one embodiment, a rice protein extract is used in the food product, especially in the acid gelling food product, in combination with pea protein extract. Preferably, these are used in quantities such that the rice protein extract/pea protein extract dry weight ratio goes from 10 : 90 to 50 : 50, for example from 20 : 80 to 40 : 60.

**Examples**

**Methods**

Determination of pH of protein extracts

20 g of dry powder of pea protein extract was dispersed at room temperature (around 22°C) in 180 g of distilled water using an overhead mixer with a 3-blade agitator to produce a slurry. The slurry was stirred for 30 min to hydrate the powder and pH of the slurry was determined using pH meter. These are reported in Tables below under the title: "pH pea protein extract".

Preparation of the sample to test suspensibility and color properties of the leguminous protein extract

Place 354 g of water (10-15°C) and protein powder together in a protein shaker bottle (Blender Bottle C01626, capacity 28 Oz) in order to reach 6.5% by weight of protein N6.25 (around 32g of powder) in the protein solution. Blender bottle C01626 is equipped with a ball system that prevents the powder from clumping to make a more homogeneous suspension. Similar shaker may be used to obtain same results. To ensure proper mixing of the protein solution within the shaker bottle, vigorously shake the bottle with 30 up-and-down motions (1 motion is one up-and-down).

Determination of the rheometer viscosity of the protein extract

The rheometer viscosity was determined by preparing a protein solution by combining 30g of dry protein extract and dispersing at room temperature (around 20°C) in 170g of distilled water, using an overhead mixer with a 3-blade agitator, so that the dry matter of the protein solution is 15%. A quantity of 0.02% sodium azide, expressed in dry weight, was added in the slurry to prevent bacterial growth. The slurries were stirred overnight to ensure complete hydration of the powders. After 12 hours, the viscosity was measured using a rheometer (Anton Paar Model MCR92) in rotational mode equipped with a concentric cylinder measuring system (CC39: cup diameter 42mm; bob diameter 38.7mm) that is filled with the recommended amount (approximately 65g) of the hydrated slurry. The viscosity is measured at 20°C over a shear rate of 5 to 600s-1. The viscosity at a shear rate of 40s-1 is reported for comparison.

Determination of the RVA viscosity of the powder preparations for beverages

- Equipment: RVA 4500 Viscometer with Julabo F12-ED Refrigerated/Heating Circulator, Plastic Paddle, and Aluminum Canisters

- Test Conditions: Incubation Temperature of 20°C, Mixing Rate of 160 rpm, Holding Time of 5 Minutes, Sample Weight of 28 g.

- Measurement Scale/Units: Viscosity (cP)

- Turn on both the RVA Viscometer and the F12-ED Water Circulator.

- Calibrate the RVA Viscometer by attaching a plastic paddle to the coupling and zero the viscosity.

- Wait 15 minutes for the protein shake solution to equilibrate before beginning this test.

- Set a program that uses a temperature setpoint of 20°C, a mixing rate of 160 rpm, a holding time of 5 minutes, and a sample weight of 28 g.

- Weigh out 28 g of the sample into the aluminum canister.

- Insert the plastic paddle into the filled canister and slide these two parts together into the RVA Motor Coupling (an audible click should be heard with plastic notches locking into the coupling).

- Once the device displays, "Test Ready," depress the RVA Tower into the RVA Viscometer to begin the test.

- Record the terminal viscosity reading after the holding time of 5 minutes of mixing (cP) once the test completes.

- Perform this testing in triplicate for each sample and calculate the average.

Suspensibility: Turbiscan Stability Index determination

- Equipment: Turbiscan LAB (Turbidimeter), ,150-mL beaker, Turbiscan Glass Measurement Cells (Including Lids and Teflon Disks) having a volume of 20 mL, and Measurement Cell Sample Holder

- Test Conditions: Incubation Temperature of 20°C

- Measurement Scale/Units: Measurement of Kinetic Stability (TSI)

- Turn on the Turbidimeter and ensure that the temperature of the incubator is set to 20°C.

- Prepare the protein shake solution as per the formulation instructions and pour it into a 150 mL beaker. Immediately fill the Turbiscan measurement cell with the protein shake solution up to the optimal sample fill volume (indicated by the plastic measurement cell sample holder - meniscus to the line).

- Insert a Teflon disk (with the grey vinyl side facing downwards) into a black cap and securely tighten this cap onto the filled measurement cell.

- Place the sample measurement cell into the Turbiscan LAB turbidimeter and close the lid.

- Set the instrument to perform stability testing over 15 minutes, with scans every 25 seconds to detect transmission and back scattering, and start the measurement.

- Record the final Turbiscan Stability Index (TSI) values. The Turbiscan apparatus records and provides 3 values: one Turbiscan Stability Index for the Top Region, one Turbiscan Stability Index for the Middle Region, one Turbiscan Stability Index for the Bottom Region. Averages of these 3 values represent the global "TSI".

- Perform this testing in duplicate for each sample and calculate the average TSI values.

Color determination

- Equipment: Konica Minolta CM-5 Colorimeter

- Test Conditions: D65/ 10°

- Measurement Scale/Units: CIE L*a*b*

- Turn on and calibrate the white measurement of the colorimeter.

- Place a flat portion of the sample over the 30mm equipment opening to completely cover the color measurement area.

- Place the sample on the colorimeter and press "Measure"

- Once a color measurement is taken, repeat steps 3-4 for a total of 3 measurements, changing the position of the samples to record more representative color measurements.

- Record an average of 3 color measurements and calculate the average

Foamability

- Equipment: HealthMaster® Elite Model LWHME Blender and 1000 mL Graduated Cylinders

- Measurement Scale/Units: Foamability is the volume of Foam Produced (mL)

- Place 354 g of purified/filtered refrigerated water and 40 g of powder mix together in the HealthMaster® Elite Model LWHME Blender.

- Blend on the Speed 1 Setting (21,750 rpm) for 10 seconds.

- Pour the protein shake into a 1000 mL graduated cylinder.

- Record initial observations of the foam, volume produced (foamability), and appearance (i.e., coarse and/or fine foam present).

- Repeat step 4 after 15 minutes of stand time for a final volume reading.

- Subtract the final volume of the foam from the initial volume to obtain a foam stability reading as the difference in mL.

- Perform this testing in duplicate for each sample and calculate the average.

Acid gel properties: sample preparation

For each pea protein extract, 20 g of dry powder of pea protein extract was dispersed at room temperature (around 22°C) in 380 g of distilled water using an overhead mixer with a 3-blade agitator to produce a slurry. The slurry was stirred for 30 min to hydrate the powder. The slurry was then transferred to a Thermomix TM6 [Vorwerk] and heated to 95°C while stirring. After a 5 min hold time at 95°C the heat was turned off on the Thermomix and the material was allowed to cool to approximately 70°C while still under agitation. Finally, the slurry was poured into a beaker and cooled in an ice bath until the temperature reached 20-22°C. The beaker was removed from the ice bath. Then 0.75% glucono-delta-lactone (GDL) expressed in dry weight was added to the sample and stirred for 2 minutes.

Determination of acid gel strength and acid gel strength ratio

The determination of the storage modulus according to the TEST A were done following the below procedure: the pH of the GDL acidified samples were monitored during acidification using a SPER pH SD card datalogger. The rheological properties (storage and loss moduli) of the GDL acidified samples were monitored maintaining the samples at 22°C during acidification using a rheometer (Anton Parr Model MCR92) equipped with a concentric cylinder measuring system (CC39: cup diameter 42 mm; bob diameter 38.7 mm) that is filled with the recommended amount (approximately 65 g) applying a strain of 0.2 % at a frequency of 1 Hz. The strain applied was within the linear viscoelastic region of the sample. Once the pH of the acidified sample has reached 4.5, the storage modulus (G') is measured and corresponds to the storage modulus according to TEST A.

The acid gel strength ratio represents the improvement due to the alkaline heat treatment. It is determined by measuring the storage modulus (G') using the Test A of one alkaline pH heat-treated pea protein extract and the storage modulus (G') using the Test A of one pH 7.0 heat-treated pea protein extract. All other processing parameters to produce the two pea protein extracts are identical. The gel strength ratio was calculated using the following equation:

Gel strength ratio = (G'$_{acid}$) of the alkaline heat treated pea protein / (G'$_{acid}$) of the neutral pH heat treated pea protein.

Determination of acid gel firmness and firmness ratio

To determine the firmness of the gel, 65 g of the GDL acidified samples prepared as described above was placed into 4oz glass jars immediately after addition of GDL and stirring. The samples were incubated at ~22°C for 22-24 hours. Firmness was measured according to the following test B, using a Texture Technologies Corp. TA.HD.plus equipped with a 5 kg load cell. A 1-inch diameter cylindric probe was penetrated into the sample under the following parameters: pretest speed = 1 mm/sec, test speed = 0.5 mm/sec, post-test speed = 10 mm/sec, distance = 15 mm, trigger force = 5 g. The firmness is defined as the highest force measured during the 15mm penetration of the sample. In the same manner than for the acid gel strength ratio, the measure of firmness of the acid gels for the alkaline pH heat-treated pea protein and for the pH 7.0 heat-treated pea protein allows to determine the gel firmness ratio, which is calculated using the following equation:

Acid gel firmness ratio = Firmness (g) of the alkaline heat-treated pea protein / Firmness (g) of the neutral pH heat treated pea protein.

**Materials**

Besides the products manufactured, different commercial pea protein isolates were evaluated in powder mix formulations. Below is reported the proteins tested and, for each of these, the advertisement on their intended use.

Pea proteins isolates advertising benefits in functionalities and sensory in powder mix applications:

PISANE™ C9: Pea protein isolate, COSUCRA. "Formulate products in powder form using PISANE™ C9? Nothing is easier thanks to its great solubility and easy reconstitution. Lastly, the unique taste of PISANE™ means you can use it in a wide range of products in powder form."

PURIS P 875: Pea protein isolate, PURIS. "PURIS P875 is an 80% pea protein designed for multi-serve beverages. This ingredient adds creaminess to non-dairy drinks via unique emulsifying applications." Protein shake is one of the application targeted.

Pea proteins isolates advertising for other applications than powder mix:

NUTRALYS® S85 F: Pea protein isolate, ROQUETTE FRERES. "NUTRALYS® pea protein S85F has good solubility, suitable for dairy and dairy-free applications. As an example, in dairy-free products, it is suitable for ready-to-drink milk-like beverages with a protein content up to 3%."

EMPRO E86® HV: Pea protein isolate, EMSLAND. Advertised as "High viscous functional protein for texturized proteins". Also, "Empro® E 86 HV is a high viscous pea protein isolate with excellent emulsifying properties. Empro® E 86 HV is extracted from the yellow pea, a natural, non-allergen and non-GMO material. It shows a balanced amino acid profile which support e.g. Products for weight control as well as sports foods."

## Example 1: manufacturing of leguminous protein extract at pilot scale

About 900 kg of pea seeds were used. The outer fibres of the peas were first separated from the seeds by crushing (mechanical separation of the outer shell and the pea seed) and depeeling (sorting the outer husks and the dehulled pea seeds using compressed air). The crushed seeds are then ground in a high-speed attrition mill to obtain pea flour. The flour is then cooled by compressed air. This flour is then rehydrated with water by a high-shear stator rotor system to allow for rapid and efficient hydration of the flour, without any pH adjustment. The crushed pea slurry was cooled to about 8°C by passing through a plate exchanger and then transferred to a stirred storage tank. A protein fraction was obtained by separating the slurry using hydrocyclones, the liquid fraction being further purified using a decanter, the protein fraction being recovered in the overflow (about 6% dry matter). The protein fraction was adjusted to pH 5 in a stirred tank by adding hydrochloric acid until the desired pH was reached. The protein fraction is then heat-treated by steam injection at 77°C into a GEA skid for about 5 seconds, after an initial immediate preheating step by passing through a plate heat exchanger. The protein fraction was then immediately flash cooled to 67°C. The heat-treated protein fraction was passed through a Flottweg Z3 decanter centrifuge. The recovered precipitated protein in the underflow was diluted in hot water (60°C) so that it could be easily pumped. This diluted underflow was adjusted to a dry matter of about 16% and then rectified to pH 8.5 using an aqueous alkaline mixture made of NaOH and KOH (weight ratio 50%/50%), with a total weight concentration of alkali (NaOH and KOH) of 4% of the alkaline mixture. The pH rectified pea protein was heat-treated at 130°C for 4.3 seconds and then cooled by flash cooling to about 70°C. This heat-treated pea protein was pumped using high-pressure pump to the atomizer and then atomized in a TGE nozzle atomizer (inlet temperature 200°C, outlet temperature 60°C).

A control sample was also produced which differed in that, before heat treatment at 130°C, the pH was rectified at 7.0 instead of 8.5 and that the alkaline mixture used was made of NaOH with a total weight concentration of NaOH of 4% of the alkaline mixture.

The recovered pea protein powder was analyzed, and results are reported in Table 1 below.

Table 1: Properties of pilot scale prototypes

| Sample | Protein content dwb (%) | Dry matter (%) | pH pea protein extract | Gel Strength (Pa) | Gel Strength Ratio | Sodium (ppm) | Potassium (ppm) | Solubility at pH 7 |
|--------|-------|-------|-------|-------|-------|-------|-------|-------|
| Control | 82.8 | 92.6 | 7.3 | 1562 | - | 9380 | 3910 | 42.1 |
| Invention | 83.7 | 92.6 | 9.3 | 2508 | 1.6 | 13300 | 7920 | 44.8 |

In Table 2 are also reported other functionalities of the proteins, including rheometer viscosity and Turbiscan Stability Index at the Bottom Region (TSIBR) and Turbiscan Stability Index at the Middle Region (TSIMR). Table 2 also reported the average of TSIBR and TSIBM (TSIBMR) and the global Turbiscan Stability Index TSI. Because of the foam is present at the top of every sample, Turbiscan Stability Index at the top Region of the measurement cell are not reported because these are more representative of the foam stability kinetics and less representative of the suspensibility and sedimentation of the protein (even though global TSI is reported for information). Average of Turbiscan Stability Index of Middle Region is more accurate to represent the suspensibility of a protein powder inside a powder shake. The color of the suspension was also determined.

Table 2: rheometer viscosity, color and suspensibility index

| | Invention | Contr ol | NUTRALYS S85 F | EMPRO E86 HV | PISANE C9 | PURIS 875 |
|--|--|--|--|--|--|--|
| Rheometer viscosity (Pa.s) | 0.53 | 0.20 | 0.30 | 0.95 | 0.80 | 0.33 |
| L* | 69.16 | 72.91 | 73.84 | 69.12 | 64.89 | 74.48 |

(continued)

|  | Invention | Contr ol | NUTRALYS S85 F | EMPRO E86 HV | PISANE C9 | PURIS 875 |
|---|---|---|---|---|---|---|
| a* | 1.03 | 3.50 | 2.39 | 4.49 | 6.73 | 4.02 |
| b* | 17.09 | 15.23 | 16.78 | 25.32 | 23.91 | 26.68 |
| TSIBR | 1.42 | 3.81 | 2.26 | 3.24 | 4.07 | 9.88 |
| TSIMR | 1.68 | 1.66 | 0.88 | 3.36 | 11.24 | 16.10 |
| TSIBMR | 1.55 | 2.73 | 1.57 | 3.30 | 7.66 | 12.99 |
| TSI global | 3.08 | 3.94 | 2.80 | 4.36 | 8.67 | 14.19 |

NUTRALYS S85F excepted, the Table shows that the suspensibility of the protein powder was more stable compared to the other samples. PISANE C9 and PURIS 875 were particularly unstable and EMPRO E86 HV was also significantly less stable. The rheometer viscosity of the protein powder was higher than most of the samples, EMPRO E86 HV and Cosucra C9 excepted, which were even higher. It is also demonstrated that the protein powder of the invention, when suspended in water, presented a* and b* values closer to 0 than most of the other samples.
Sensory evaluation was conducted by a qualified panel of twenty persons, all employees of the applicant. The tasting session was organized using white light with blind products presented to the different panelists in a randomized order (3-digit codes).
Regarding the sensory attributes, thickness, creaminess and mouthcoating were evaluated. The different definitions provided to the trained panel were the following:

- Thickness: The amount of viscosity of the sample.

- Creaminess: The degree of combined qualities of being homogeneous, smooth, and thick texture like double cream.

- Mouthcoating: The amount of film left on the mouth surfaces.

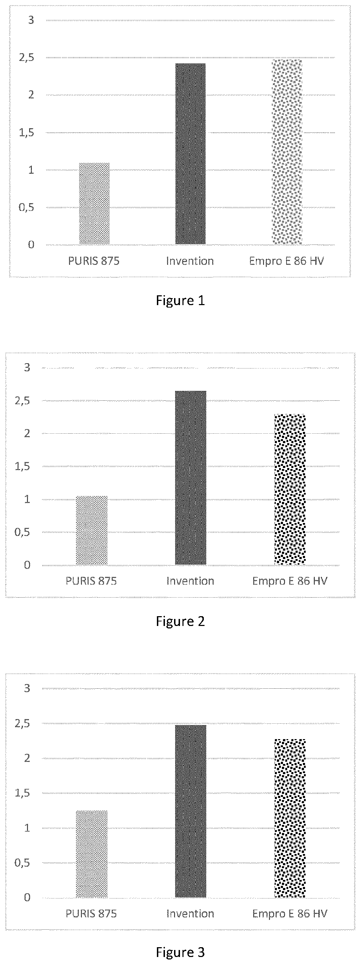

The evaluation was conducted as a ranking test between the three proteins by each panelist. Based upon ISO-8587:2011, the ranking methodology was selected "to find if differences exist." The procedure for presentation of the samples was followed based upon complete block design. "The assessors evaluate the samples presented in random order and place them in rank order on the designated attribute."
The sensory evaluation of the different protein extracts are reported in Figure 1 (Thickness), Figure 2 (Creaminess) and Figure 3 (Mouthcoating). These results demonstrate, in particular vs. Puris P875 that is advertised as bringing creaminess to the beverages, that the protein of invention can bring higher creaminess (Figure 2).

**Example 2: Evaluation of the powder mix of the invention vs powder mix using control protein and powder mix formulations of the market**

In this evaluation, two powder mix formulations were tested, one free of hydrocolloids (Table 3) and one comprising hydrocolloids (Table 4)

Table 3: recipe without hydrocolloids

| Ingredient | wt.% | Weight (g) |
|---|---|---|
| Control or invention protein isolate | 80.00 | 600.00 |
| NUTRIOSE FM06 (Roquette Frères) | 15.30 | 114.75 |
| Organic Coconut MCT Oil Powder (Pat Ingredients) | 4.70 | 35.25 |

Table 4: recipe with hydrocolloids

| Ingredient | wt.% | Weight (g) |
|---|---|---|
| Control protein | 80.00 | 400.00 |
| NUTRIOSE FM06 (Roquette Frères) | 14.75 | 73.75 |

(continued)

| Ingredient | wt.% | Weight (g) |
|---|---|---|
| Organic Coconut MCT Oil Powder (Pat Ingredients) | 4.70 | 23.50 |
| Keltrol SF Xanthan Gum (CP Kelco) | 0.55 | 2.75 |

The powder mix formula comprising control protein without hydrocolloid is powder mix n°1. The powder mix formula comprising control protein with hydrocolloid is powder mix n°2. The powder mix formula comprising invention protein without hydrocolloid is powder mix n°3.

The following process was used:

Dry Blend Preparation: Use the Turbula blender to blend all the dry ingredients at 70 rpm for 5 minutes.

For the preparation of the protein powder suspension, one preparation was done for foamability testing and one other preparation for other analytical testings.

1. Obtain the HealthMaster® Elite Model LWHME blender (for foamability testing) and shaker bottles (for the remainder of analytical testing).

2. Combine 354g (89.85% of the final solution) of purified/filtered refrigerated water and 40g (10.15% of the final solution) of powdered mix in the blender or shaker bottle. Making 394g of total solution (6.5% total protein content in solution).

3. Blender: Blend on the Speed 1 Setting (21,750 RPM) for 10 seconds for foamability testing.

4. Shaker Bottle: Shake the sample consistently for 15 seconds until fully dispersed for the other testings (rheometer viscosity, suspensibility and sensory evaluation).

Regarding the sensory attributes, thickness, creaminess and mouthcoating were evaluated. Sensory evaluation of the powder mixes of the invention (n°3) was investigated in comparison with control powder mix n°1 in a first session. Sensory evaluation of the powder mixes of the invention (n°3) was investigated in comparison with powder mix n°2 that did comprise hydrocolloids and the control protein.

The two sensory evaluations were conducted by a qualified panel of seventeen persons, all employees of the applicant. Each tasting session was organized on a different day. It was done using white light with blind products presented to the different panelists in a randomized order (3-digit codes).

The evaluation was conducted as a pairwise comparison test of the two protein mix by each panelist. Based upon ISO-8587:2011, the methodology was selected "to find if differences exist." The procedure for presentation of the samples was followed based upon complete block design. "The assessors evaluate the samples presented in random order and place them in rank order on the designated attribute."

Powder mix of the invention had more body than the control (n°2): it was thicker (p-value < 0.0001), creamier (p-value < 0.0001), and had more mouthcoating (p-value < 0.0023). The p-values demonstrate how significant the difference was perceived by the trained panel: these three p-values reflect a significant difference in perception by the trained panel.

Powder mix of the invention did not show any significant differences in the mouthfeel/texture aspect with the powder mix n°3 that comprises hydrocolloids and control protein: it was equally thick (p-value > 0.9999), equally creamy (p-value = 0.8036), and had equal mouthcoating (p-value > 0.9999). These three p-values reflect no significant difference in perception by the trained panel.

Further, different commercial powder mixes of the market were evaluated and compared to these 3 formulations in regard to viscosity, foamability and suspensibility. For these market samples, the quantities of the powder mix to be suspended in water were selected so that the beverages reach same protein content than above (6.5% total protein content in solution). Foamability, viscosity and suspensibility were determined and are reported in Table 5.

Table 5: Foamability, viscosity and suspensibility

| Powder mix | 1 | 2 | 3 (Invention) | 4 | 5 | 6 | 7 | 8 |
|---|---|---|---|---|---|---|---|---|
| RVA viscosity (cP) | 43 | 75 | 86 | 29 | 73 | 48 | 51 | 25 |
| TSIMR | 2.69 | 3.18 | 1.96 | 7.31 | 5.96 | 7.00 | 6.86 | 10.85 |

(continued)

| Powder mix | 1 | 2 | 3 (Invention) | 4 | 5 | 6 | 7 | 8 |
|---|---|---|---|---|---|---|---|---|
| Foamability (% vol) | 21.81 | 12.43 | 7.32 | 27.14 | 13.73 | 15.85 | 22.39 | 19.62 |

1: control powder mix free of hydrocolloids - 2: control powder mix with hydrocolloids - 3: powder mix of the invention - 4: Pepsico EVOLVE Vanilla Bean Plant-Based Protein Powder - 5: Orgain Sport Plant-Based Protein Powder Vanilla Flavored - 6: Orgain Standard Plant-Based Protein Powder Vanilla Flavored - 7: Vega Premium Sport Protein Powder Vanilla Flavored - 8: Garden of Life Organic Sports Vanilla Flavored Protein Powder

It has to be noted that, except Garden of life powder mix, all the commercial powder mixes comprised hydrocolloids, such as xanthan gum, acacia gum, guar gum. The powder mix of the invention had the highest viscosity whereas it does not comprise any hydrocolloid. Because with the thickening, creaminess and mouthfeel perception benefits, the pea protein of the invention can replace hydrocolloids in this application. It is also demonstrated that it can also replace emulsifiers by seeing how stable the powder mix is in solution, as shown by TSIMR values. One other advantage of the protein powder of the invention is that it can provide a powder mix beverage that has low foaming. All these attributes confirm the advantage of this protein isolate in powder mix applications.

**Example 3: Evaluation of the attributes of the powder mix of the invention vs powder mixes using comparative proteins**

In this evaluation, one other powder mix formulation was used for testing five different proteins including protein of the invention and of the control. Recipe is reported in Table 6.

Table 6: composition of the powder mix

| Ingredients | wt % |
|---|---|
| Protein | 88.500 |
| NUTRIOSE® FM06 soluble fiber | 10.586 |
| Lecithin sunflower | 0.700 |
| Xanthan gum | 0.128 |
| Sucralose | 0.043 |
| Acesulfam K | 0.043 |
| Total | 100.000 |

The different powder mixes were prepared in a similar manner. The powder mix beverage was prepared by putting 40g of powder mix in a protein shaker with 325ml of Evian water and was vigorously shaken 30 seconds. The beverage is poured in a test tube. The foam volume in mL was measured and reported after 15 minutes.
In Table 7 are reported the results obtained concerning RVA viscosity and foaming for the different powder mix beverages.

Table 7: attributes of the different powder mixes

| Protein of the powder mix | RVA viscosity (cP) | Volume of foam after 15 min (mL) |
|---|---|---|
| Invention | 334 | 20 |
| Control | 73 | 100 |
| NUTRALYS S85 F | 166 | 50 |
| PISANE C9 | 133 | 33 |
| PURIS 875 | 68 | 103 |

This evaluation shows that the protein of the invention can bring increased viscosity, which can highly contribute to the mouthfeel of the beverage. Another advantage is the low foaming observed. Moreover, high levels of sedimentation were observed for powder mix beverages comprising PISANE C9 or PURIS 875, whereas it is not the case with the protein of the invention which provides a much more suspensible protein powder mix. These results in this alternative powder mix formulation, with higher protein concentration in the beverage, confirmed results obtained with powder mixes of the Example 2, which demonstrates the versatility in usage of the protein of the invention.

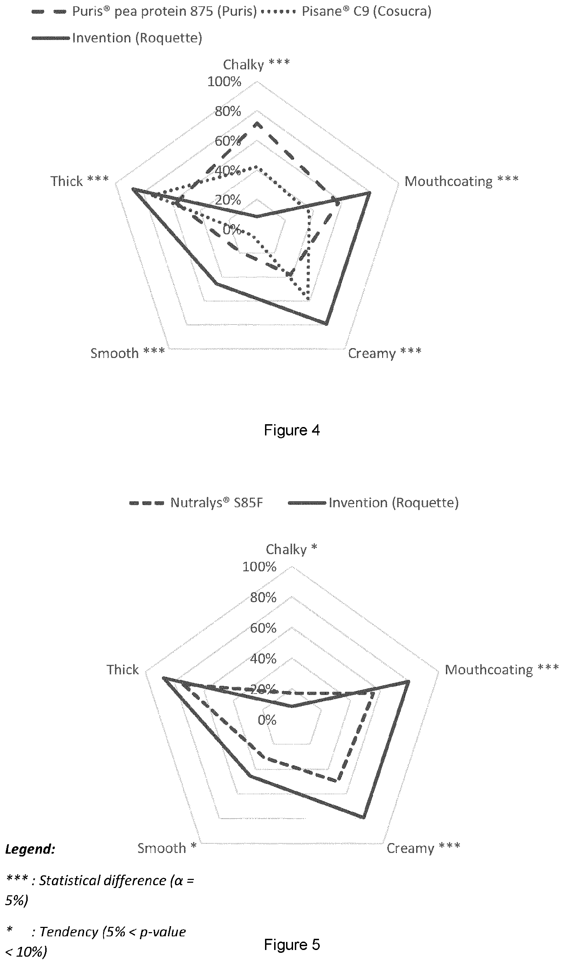

The sensory evaluation of the texture of the powder mix was also conducted for these powder mix beverages. Results are reported in Figures 4 and 5.

Besides mouthcoating, thickness and creaminess, 2 other texture attributes were also determined during this session: smoothness and chalkiness. The definitions of these 2 other attributes were provided to the trained panel:

- Smoothness: No particles perceived in mouth during and after the tasting, like milk or water.

- Chalkiness: Particles perceived in mouth during and after the tasting, like wheat starch in water (10%).

The powder mix beverage was stored and served at room temperature before tasting session.

The test conditions were the following:

- Sensory lab (ISO *8589:2007*)

- White light

- Blind products (3-digit codes) with a randomized order

- ≥ 20 qualified or expert panelists

- Sensory method: CATA (Check-All-That-Apply; *ISO* 5492:2008, 4.24)

- 5 texture attributes (chalkiness, mouthcoating, creaminess, smoothness, thickness)

- Statistical analysis: $Chi^2$ test + Marascuilo procedure

This method is a semi-quantitative method. The powder mix of the invention is the least chalky and brings the most mouthcoating, creamy, smooth and thick texture. Puris® based powder mix is the chalkiest, the least creamy and the least thick. Pisane® C9 based powder mix is the least mouthcoating and has the lowest smoothness. Compared to NUTRALYS S85 F based powder mix, the invention is bringing much more mouthcoating and creaminess textures and tends to be less chalky and smoother.

## Discussion on results obtained in Examples 1 to 3

All these results demonstrate the interest of the powder mix of the invention using pea proteins with defined functionalities, that combine low value of TSIMR (below than 5) and intermediate values of rheometer viscosity (between 0.40 to 0.75 Pa.s). Indeed, these proteins did allow the production of stable powder mix beverages, with no addition of emulsifiers or hydrocolloids (Example 2). Moreover, the texture of the powder mix of the invention, that was free of any hydrocolloids, was felt much creamier than the powder mix beverage of same recipe but with control protein instead. It was considered by the trained panel to have no significant difference in the creaminess in comparison to a powder mix comprising the control pea protein and hydrocolloids (xanthan gum). The results confirmed the evaluation done in Example 1 in which it was demonstrated that the protein extract used in the powder mix of the invention did present high creaminess. It is particularly surprising in that the protein isolates useful to the invention did present functionalities very different from the proteins that are advertised to provide benefits in powder mix applications (PISANE C9 and PURIS P875). It is also surprising to observe that, whereas the protein of the invention has lower rheometer viscosity than EMPRO E86 HV pea protein, it does not negatively impact the creaminess. The Example 3 confirmed improvements in a powder mix beverage thanks to the protein useful to the invention in comparison with other proteins. The benefits included improved suspensibility and lower foaming of the powder mix beverage. In the powder mix beverage, the improved texture was also found smoother and having lower chalkiness.

The production of other useful protein extracts is now going to be described in the following examples:

## Example 4: Alkaline pH adjustment prior to heat treatment

Pea flour obtained from dried yellow peas was blended with 40°C water at a weight ratio of around 1:4.5 and stirred for approximately 10 minutes before separating using a Flottweg decanter to remove the insoluble starch and fiber components. The protein containing overflow was acidified to pH 5 using hydrochloric acid and heated using indirect steam heating to 55°C and held for 20 minutes to facilitate coagulation of the isoelectrically precipitated globulin proteins. The protein was separated from the other soluble components using the Flottweg decanter to form a concentrated protein acid curd. The protein acid curd was diluted to 12% solids using water, equilibrated to ~40°C, and pH adjusted to 7.0 using sodium hydroxide. The sample was then passed through a shear device to ensure homogeneity of the sample before heating with direct steam injection to 140°C for 10.5 seconds and flash cooling to 70°C. The sample was homogenized to prevent any protein aggregates from blocking the spray dryer nozzle before spray drying at an inlet temperature of 210°C and an outlet temperature of 90°C to a moisture content of <7%.

This process was repeated 2 more times. The second sample was adjusted to pH 8.0 using sodium hydroxide before heat treatment and the third sample was pH adjusted to 9.0 using sodium hydroxide before heat treatment. All other process parameters were the same for all 3 samples.

Table 8 lists the acid gel strength and firmness for pea protein isolates obtained after a heat treatment at pH 7.0, 8.0, or 9.0. Further, the pH of the dried pea protein extract obtained after the corresponding heat treatment has been measured.

Table 8

| Sample | Heat Treatment pH | pH pea protein extract |
|--------|-------------------|------------------------|
| 1 | 7.0 | 7.0 |
| 2 | 8.0 | 8.0 |
| 3 | 9.0 | 8.9 |

## Example 5: Effect on the use of different caustics

Pea flour derived from dried yellow peas was blended with 40°C water at a ratio of 1:4.5 and stirred for approximately 10 minutes before separating using a Flottweg decanter to remove the insoluble starch and fiber components. The protein containing overflow was acidified to pH 5 using hydrochloric acid and heated using indirect steam heating to 55°C and held for 20 minutes to facilitate coagulation of the isoelectrically precipitated globulin proteins. The protein was separated from the other soluble components using the Flottweg decanter to form a concentrated protein acid curd. The curd was diluted to ~15% solids using water, divided into 8 portions and kept at room temperature until further processing the same day.

Each portion was pH adjusted (see table below for details on pH and description of caustic(s)), passed through a shear device to ensure homogeneity of the sample and heated with direct steam injection to 140°C for 10.5 seconds and flash cooled to 70°C. Afterwards the samples were frozen overnight before freeze drying to a moisture content of < 7%.

Table 9 describes the caustic used for pH adjustment, the ingredient heat treatment pH, and the pH of the pea protein extract obtained after the corresponding heat treatment has been measured.

Table 9

| Sample | Caustic | Ingredient heat treatment pH | pH pea protein extract |
|--------|---------|------------------------------|------------------------|
| A | 3M NaOH | 7.0 | 7.1 |
| B | 3M NaOH | 9.0 | 8.7 |
| C | 1.5M NaOH + 1.5M KOH | 7.0 | 6.9 |
| D | 1.5M NaOH + 1.5M KOH | 9.0 | 8.7 |
| E | 3M KOH | 7.0 | 7.1 |
| F | 3M KOH | 9.0 | 8.7 |
| G | 2M NaOH + 1M $Ca(OH)_2$ | 7.0 | 7.2 |
| H | 2M NaOH + 1M $Ca(OH)_2$ | 9.0 | 8.5 |

Further, to determine whether the protein became denatured after the heat treatment regardless of the pH at which the heat treatment was conducted, differential scanning calorimetry measurements were performed before and after the heat treatment, on the NaOH caustic samples heat treated at pH 7 and pH 9 (samples A and B respectively). Pre heat treatment samples were collected and freeze dried in the same manner as the post heat treatment samples. 10% protein solutions were prepared using deionized water. 34-36mg of each slurry was placed in a hermetically sealed high volume stainless steel pan and heated from 5°C to 150°C at a heating rate of 10°C/min in a TA Instruments Discovery DSC250. The denaturation onset and peak temperatures were recorded, and the denaturation enthalpy was calculated using Trios software.

Table 10 describes the differential scanning calorimetry parameters for pea protein isolates exposed to heat treatment at different pH.

Table 10

| Protein Sample pH | Heat Treatment | Onset Temperature (°C) | Peak Temperature (°C) | Enthalpy (J/g sample) |
|---|---|---|---|---|
| 7 | None | 74.8 | 86.6 | 0.38 |
| 7 | 140°C/10.5 sec | 97.4 | 100.5 | 0.022 |
| 9 | None | 66.5 | 83.4 | 0.15 |
| 9 | 140°C/10.5 sec | No denaturation peak detected (0J/g) | | |

There is a significant decrease in the enthalpy of denaturation for the pH 7 post heat treatment sample and no denaturation peak detected for the pH 9 post heat treatment sample. These results indicate that the protein is denatured using a heat treatment of 140°C for 10.5 seconds regardless of the pH of the sample.

## Example 6: Impact of neutralization to pH 7 after heat treatment/before spray drying

Pea flour derived from dried yellow peas was blended with 40°C water at a ratio of 1:4.5 and stirred for approximately 10 minutes before separating using a Flottweg decanter to remove the insoluble starch and fiber components. The protein containing overflow was acidified to pH 5 using hydrochloric acid and heated using indirect steam heating to 55°C and held for 20 minutes to facilitate coagulation of the isoelectrically precipitated globulin proteins. The protein was separated from the other soluble components using the Flottweg decanter to form a concentrated protein acid curd. The curd was diluted to -17% solids using water, divided into 2 portions, and kept at room temperature until further processing the same day.

The first portion was equilibrated to ~60°C and pH adjusted to 8.5 using a blend of 1.5N sodium hydroxide + 1.5N potassium hydroxide before adding additional water to reach a final solids concentration of 15%. The sample was then passed through a shear device to ensure homogeneity of the sample before heating with direct steam injection to 140°C for 10.5 seconds and flash cooling to 70°C. The sample was homogenized to prevent any protein aggregates from blocking the spray dryer nozzle before spray drying at an inlet temperature of 210°C and an outlet temperature of 90°C to a moisture content of <7%. The second portion was equilibrated to ~60°C and pH adjusted to 8.5 using a blend of 1.5N sodium hydroxide + 1.5N potassium hydroxide before adding additional water to reach a final solids concentration of 15%. The sample was then passed through a shear device to ensure homogeneity of the sample before heating with direct steam injection to 140°C for 10.5 seconds and flash cooling to 70°C. While maintaining the temperature at ~65°C, 3N hydrochloric acid was added to reduce the pH to 7.0. The neutralized sample was homogenized to prevent any protein aggregates from blocking the spray dryer nozzle before spray drying at an inlet temperature of 210°C and an outlet temperature of 90°C to a moisture content of <7%.

Table 11 compares the pH of the pea protein extract obtained after the corresponding heat treatment and optional neutralization has been measured.

Table 11

| Sample | pH pea protein extract |
|---|---|
| Non-neutralized | 9.0 |
| Neutralized | 7.2 |

## Example 7: Use of the pea protein extracts at different pH: influence of the pH when used.

Pea flour derived from dried yellow peas was blended with 50°C water at a ratio of 1:4.5 and stirred for approximately 10 minutes before separating using a tricanter horizontal centrifuge to remove the insoluble starch and fiber components. The protein containing overflow was acidified to pH 5 using hydrochloric acid and heated using indirect steam heating to 60°C and held for 10 minutes to facilitate coagulation of the isoelectrically precipitated globulin proteins.

The protein was separated from the other soluble components using an Alfa Laval horizontal decanter to form a concentrated protein acid curd. The protein acid curd was diluted to 18% solids using water, equilibrated to ~60°C, and pH adjusted to 7.0 (control) or 8.5 (invention) using a blend of 5% (w/v) sodium hydroxide + 5% (w/v) potassium hydroxide. The samples were then heated with direct steam injection to 135°C for 15 seconds and flash cooled to 70°C. The samples were pumped using a high shear pump to a spray dryer at an inlet temperature of 210°C and an outlet temperature of 90°C and dried into powders with a moisture content of <7%.

Table 12 lists the pH of the control and invention pea protein extract samples and the contents of sodium and potassium in the samples.

Table 12

| Sample | heat treatment pH | pH pea protein extract | Sodium (ppm) | Potassium (ppm) |
|---|---|---|---|---|
| Control | 7.0 | 7.2 | 5610 | 10600 |
| Invention | 8.5 | 8.6 | 7150 | 13500 |

It was quantified that the molar ratio Na : K into the obtained leguminous protein sample is around 50 : 50.

**Example 8: Additional characterization of commercial legume protein isolates**

The gel strength were measured for 2 different commercial pea protein isolates.

Table 13 lists the acid gel properties.

| Producer | pH pea protein extract | Gel Strength (Pa) |
|---|---|---|
| Roquette NUTRALYS® S85F | 7.7 | 1634 |
| Emsland EMPRO® E86 | 7.4 | 1460 |

**Claims**

1.  Powder preparation for beverages comprising a leguminous protein extract, wherein the leguminous protein extract has a protein content, expressed on dry weight basis of the extract, of 75% or higher, a dry matter ranging from 90 to 100%, wherein the protein extract has a Turbiscan Stability Index TSI at the Middle Region TSIMR at 15 minutes below 5.0 and a rheometer viscosity going from 0.40 to 0.75 Pa.s, the viscosity being determined at 20°C, with a shear rate of 40s-1, on an aqueous suspension having 15% weight of dry matter.

2.  Powder preparation for beverages of claim 1, wherein the leguminous protein extract has a mean particle size d50 size going from 10 to 400 microns or from 20 to 200 microns or 30 to 100 microns.

3.  Powder preparation for beverages of the preceding claims, wherein the leguminous protein extract has a TSIMR at 15 minutes going from 0.5 to 3.0 or from 0.5 to 2.0.

4.  Powder preparation for beverages of any of the preceding claims, wherein the leguminous protein extract has a rheometer viscosity going from from 0.42 to 0.75 Pa.s or from 0.45 to 0.70 Pa.s or from 0.48 to 0.65 Pa.s.

5.  Powder preparation for beverages of any of the preceding claims, wherein the leguminous protein extract has CIE a*value that goes from -3 to +3.

6.  Powder preparation for beverages of any of the preceding claims, wherein the leguminous protein extract has CIE b*value that goes from +10 to +20.

7.  Powder preparation for beverages of any of the preceding claims wherein the leguminous protein extract comprises sodium Na and potassium K in a molar ratio (Na/K) ranging from 10:90 to 90:10.

8.  Powder preparation for beverages of any of the preceding claims, wherein the leguminous protein extract is a pea protein extract.

9. Powder preparation for beverages of any of the preceding claims, wherein the leguminous protein extract is denatured.

10. Powder preparation for beverages of any of the preceding claims wherein the pH of the leguminous protein extract ranges from 8.0 to 9.5, for example from 8.5 to 9.4.

11. Powder preparation for beverages of any of the claims 1 to 9 wherein the pH of the leguminous protein extract ranges from 5.0 to 8.0, for example from 6.0 to 8.0.

12. Powder preparation for beverages of any of the preceding claims, comprising, based on the total weight of the powder preparation, 20 to 99% by weight of the leguminous protein extract and 1 to 80% of additional powder ingredients selected from hydrocolloids, emulsifiers, bulking agents, lipids, proteins other than the leguminous protein extract, antioxidants, enzymes, flavors, vitamins, minerals, colorings, sugars or sugar alcohols, high intensity sweeteners, probiotics and blends thereof.

13. Powder preparation for beverages of claim 12, wherein the powder preparation comprises, based on the total weight of the powder preparation, from 50 to 98% by weight of the leguminous protein extract and from 2 to 50% of the additional powder ingredients or from 65 to 97% by weight of a leguminous protein extract and from 3 to 35% of additional powder ingredients.

14. Powder preparation for beverages of any of the preceding claims, wherein the powder preparation is free of hydrocolloids and/or emulsifiers.

15. Process of manufacturing a powder preparation for beverages of any of the preceding claims, wherein it comprises a step of dry blending of the leguminous protein extract.

16. Use of the leguminous protein extract used in any one of the claims 1 to 14 for improving creaminess and/or for decreasing chalkiness of a powder preparation for beverages.

17. Beverage comprising the powder preparation of claims 1 to 14 and a liquid, wherein the beverage advantageously comprises from 3 to 25% by weight of powder preparation based on the total weight of the beverage, preferably from 5 to 20%.

18. Method of preparation of the beverage comprising the steps of:

    - providing the powder preparation for beverages of any of the claims 1 to 14;
    - providing a liquid;
    - putting the liquid and the powder preparation in a recipient;
    - shaking or blending the recipient until the powder preparation is dispersed in the liquid to form the beverage.

Figure 1

Figure 2

Figure 3

− − Puris® pea protein 875 (Puris) •••••• Pisane® C9 (Cosucra)
━━━ Invention (Roquette)

Figure 4

− − − Nutralys® S85F    ━━━ Invention (Roquette)

**Legend:**

*** : Statistical difference (α = 5%)

*    : Tendency (5% < p-value < 10%)

Figure 5

Europäisches
Patentamt

European
Patent Office

Office européen
des brevets

# EUROPEAN SEARCH REPORT

**Application Number**

EP 23 30 7112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/028509 A1 (ANHEUSER BUSCH INBEV SA [BE]) 18 February 2021 (2021-02-18) * claims 1-33 * | 1-18 | INV. A23L2/39 A23L2/52 A23L2/66 A23L33/185 |
| A | WO 2021/133795 A1 (CARGILL INC [US]; GOLDSTEIN AVI [US] ET AL.) 1 July 2021 (2021-07-01) * claims 1-23; WPI abstract * | 1-18 | |
| A | WO 2017/143298 A1 (HAMPTON CREEK INC [US]) 24 August 2017 (2017-08-24) * examples 24, 32, 33 and 35; claims 1-61 * | 1-18 | |

**TECHNICAL FIELDS SEARCHED (IPC)**

A23L

The present search report has been drawn up for all claims

| Place of search | Date of completion of the search | Examiner |
|---|---|---|
| Munich | 23 May 2024 | Georgopoulos, N |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 7112

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | Publication date | Patent family member(s) | Publication date |
|---|---|---|---|
| WO 2021028509 A1 | 18-02-2021 | BE 1027671 A1 | 07-05-2021 |
| | | BR 112022002538 A2 | 19-07-2022 |
| | | CA 3147533 A1 | 18-02-2021 |
| | | EP 4013237 A1 | 22-06-2022 |
| | | GB 2586918 A | 10-03-2021 |
| | | JP 2022545379 A | 27-10-2022 |
| | | US 2022295824 A1 | 22-09-2022 |
| | | WO 2021028509 A1 | 18-02-2021 |
| WO 2021133795 A1 | 01-07-2021 | BR 112022012513 A2 | 06-09-2022 |
| | | CA 3162926 A1 | 01-07-2021 |
| | | CN 114845565 A | 02-08-2022 |
| | | EP 4081051 A1 | 02-11-2022 |
| | | US 2023075232 A1 | 09-03-2023 |
| | | WO 2021133795 A1 | 01-07-2021 |
| WO 2017143298 A1 | 24-08-2017 | AU 2017220193 A1 | 30-08-2018 |
| | | AU 2021286368 A1 | 20-01-2022 |
| | | BR 112018016944 A2 | 08-01-2019 |
| | | CA 3014625 A1 | 24-08-2017 |
| | | CN 109068680 A | 21-12-2018 |
| | | CO 2018009837 A2 | 10-10-2018 |
| | | EP 3416497 A1 | 26-12-2018 |
| | | JP 7025618 B2 | 25-02-2022 |
| | | JP 7390409 B2 | 01-12-2023 |
| | | JP 2019509036 A | 04-04-2019 |
| | | JP 2022058645 A | 12-04-2022 |
| | | SG 11201806963P A | 27-09-2018 |
| | | US 2017238590 A1 | 24-08-2017 |
| | | US 2019191735 A1 | 27-06-2019 |
| | | US 2020352195 A1 | 12-11-2020 |
| | | US 2023180788 A1 | 15-06-2023 |
| | | WO 2017143298 A1 | 24-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022144452 A1
- WO 2020007940 A1
- WO 2007017572 A
- WO 2011124862 A
- WO 2019053387 A

**Non-patent literature cited in the description**

- **C-L HEYDLEY et al.** Developing novel pea starches. *Proceedings of the Symposium of the Industrial Biochemistry and Biotechnology Group of the Biochemical Society*, 1996, 77-87